(19) Europäisches Patentamt
European Patent Office
Office européen des brevets

(11) Numéro de publication: **0 281 461 B1**

# (12) FASCICULE DE BREVET EUROPEEN

(45) Date de publication de fascicule du brevet: **21.04.93** (51) Int. Cl.$^5$: **C08G 69/44**

(21) Numéro de dépôt: **88400363.3**

(22) Date de dépôt: **17.02.88**

## (54) Polyesteramides et polyétheresteramides - leur procédé de fabrication.

(30) Priorité: **26.02.87 FR 8702569**

(43) Date de publication de la demande:
**07.09.88 Bulletin 88/36**

(45) Mention de la délivrance du brevet:
**21.04.93 Bulletin 93/16**

(84) Etats contractants désignés:
**AT BE CH DE ES FR GB IT LI NL SE**

(56) Documents cités:
**US-A- 4 075 177**

(73) Titulaire: **ELF ATOCHEM S.A.**
**4 & 8, Cours Michelet La Défense 10**
**F-92800 Puteaux(FR)**

(72) Inventeur: **Cuzin, Daniel**
**9, Allée de l'Abbé Emile Bois**
**F-78560 Port Marly(FR)**
Inventeur: **Judas, Didier**
**11, Rue Beudant**
**F-75017 Paris(FR)**

(74) Mandataire: **Foiret, Claude et al**
**ELF ATOCHEM S.A. Département Propriété Industrielle La Défense 10 - Cedex 42**
**F-92091 Paris-La-Défense (FR)**

EP 0 281 461 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des produits nouveaux : des polyesteramides et des polyétheresteramides de formule :

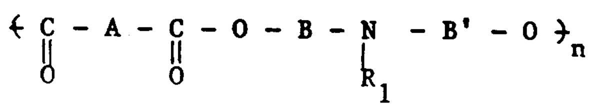

dans laquelle A désigne une séquence polyamide et

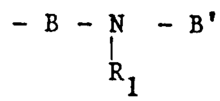

une structure dérivé d'un α,ω diol contenant dans la chaine une fonction amine tertiaire sur laquelle est fixée un radical alcoyle, aromatique ou cycloaliphatique $R_1$.

Ces polyestreamides et polyétheresteramides sont obtenus par réaction d'un polyamide dicarboxylique avec une amine tertiaire di β hydroxylée ou un polyoxyalkylèneglycol comportant une fonction amine tertiaire dans la chaine.

La présence du radical $R_1$, fixé sur la fonction amine tertiaire dans le polymère obtenu, conduit à un polyamide possédant une bonne tenue à l'eau, contrairement aux polyamides connus obtenus par réaction d'un polyamide dicarboxylique sur un simple polyoxyalkylèneglycol hydroxylé comme décrit dans les brevets français 2 401 947 et 2 273 021.

"Dans le brevet US 4 075 177 sont décrites des résines cationiques thermodurcissables qui sont des copolymères polyamide-polyester obtenus par réaction d'au moins un acide dicarboxylique avec un mélange d'au moins une polyamine et d'une dialkanolamine, la partie polyamide contenant des groupements amines internes et des groupements amides terminaux (colonne 3, lignes 55/60)".

De façon plus précise les produits selon l'invention répondent à la formule générale :

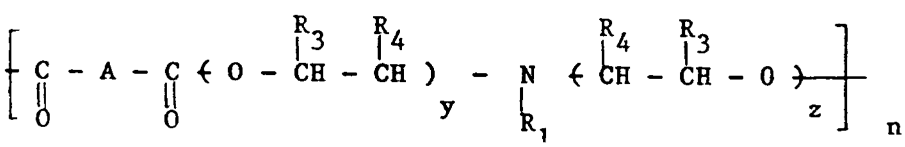

dans laquelle
$R_3$ et $R_4$ représentent l'hydrogène, ou seulement l'un des deux représente l'hydrogène, l'autre étant un radical alcoyle contenant de 1 à 24 atomes de carbone, et de préférence n'en contenant qu'un,
$R_1$ est un radical alcoyle linéraire ou ramifié, saturé ou insaturé contenant de 1 à 24 atomes de carbone ou un radical aromatique ou cycloaliphatique,
y + z est compris entre 2 et 100 sachant que y et z sont au moins égaux à 1,
n représente une répétition d'un nombre d'unités récurrentes constituant la chaine macromoléculaire. Habituellement n n'est pas inférieur à 1 avec 75 comme maximum.

Dans le cas où y et z sont chacun égaux à 1 le produit corresondant est un polyesteramide.

La proportion pondérale du groupement

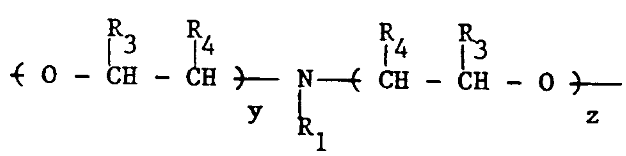

par rapport au groupement total

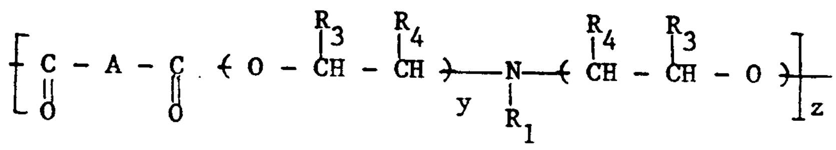

peut varier de 2 à 90 % et de préférence de 5 à 85 %.

La séquence polyamide dicarboxylique

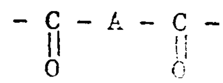

est connue en elle-même. Elle correspond habituellement au groupement :

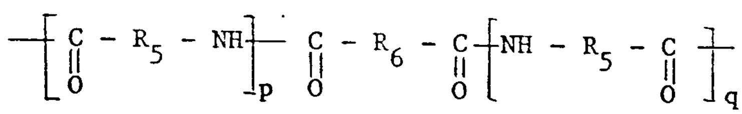

dans lequel :

$R_5$ peut être :

soit une chaine hydrocarbonée constituant un lactame et/ou un aminoacide dobnt le nombre d'atomes de carbone est de préférence compris entre 4 et 14

soit la structure

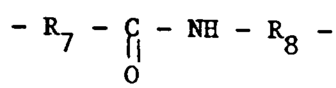

dans laquelle

$R_7$ et $R_8$ sont respectivement les restes hydrocarbonés d'un diacide et d'une diamide

$R_6$ représente le reste du diacide organique utilisé comme limitateur de chaine. Ce peut être par exemple un groupement aliphatique cycloaliphatique ou aromatique

p et q, identiques ou différents, l'un d'eux pouvant être nul, représentent une répétition d'un nombre d'unités récurrentes constituant la chaine macromoléculaire de la séquence polyamide dicarboxylique.

La masse moléculaire moyenne de la séquence polyamide dicarboxylique est compris entre 300 et 15 000 et mieux entre 600 et 5 000, p + q étant compris entre 1 et 100 et mieux entre 2 et 4.

De façon générale les polyesteramides et polyétheresteramides selon l'invention peuvent encore se formuler :

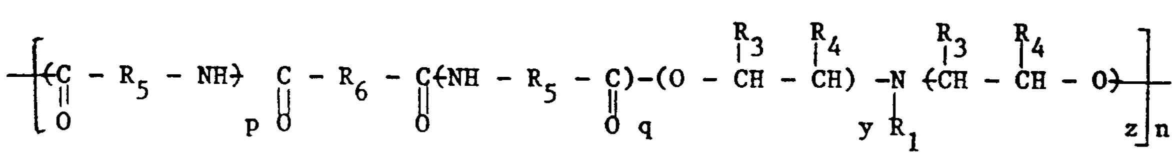

$R_1$, $R_3$, $R_4$, $R_5$, $R_6$, p, q, y, z, n étant définis comme précédemment.

Les produits selon l'invention sont obtenus par réaction d'un polyamide dicarboxylique dont les fonctions acides sont situées aux extrémités de la chaine avec un $\alpha,\omega$ diol qui est soit une amine tertiaire di $\beta$ hydroxylée, soit un polyoxyalkylèneglycol comportant une fonction amine tertiaire dans la chaine. La réaction peut se schématiser comme suit :

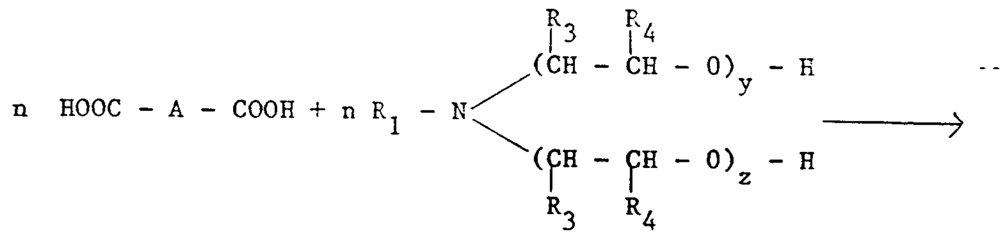

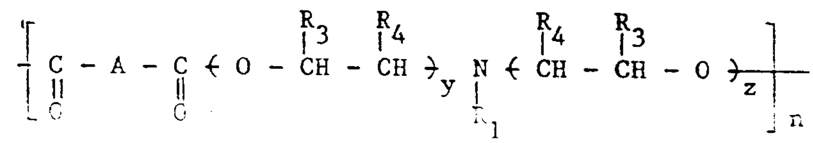

les symboles A, $R_1$, $R_3$, $R_4$, y, z, n étant définis comme précédemment.

Lorsque l'$\alpha,\omega$ diol est une amine tertiaire di $\beta$ hydroxylée, la polycondensation de celle-ci avec un polyamide $\alpha,\omega$ dicarboxylique permet d'obtenir un polyesteramide comportant au moins une fonction amine tertiaire par chaine. Lorsque l'$\alpha,\omega$ diol est un polyoxyalkylèneglycol comportant dans la chaine macromoléculaire une fonction amine tertiaire sur laquelle est fixé un radical alcoyle, aromatique ou cycloalyphatique le produit obtenu par polycondensation avec un polyamide $\alpha,\omega$ dicarboxylique est un polyétheresteramide contenant au moins une fonction amine tertiaire par chaine.

Le reste de l'$\alpha,\omega$ diol, représentant le groupement

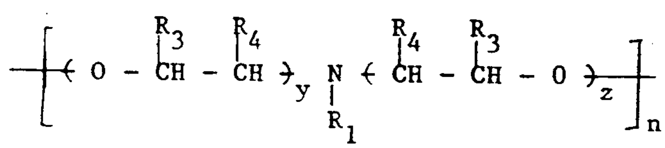

peut se trouver en proportion de 2 à 90 % en poids, et mieux de 5 à 85 %, dans la macromolécule de polyamide obtenu.

La réaction de polycondensation entre le polyamide dicarboxylique et l'$\alpha,\omega$ diol, habituellement en proportions en poids respectives comprises entre 98 et 10 % pour 2 à 90 % et de préférence comprises entre 95 et 15 % pour 5 à 85 %, séeffectue par mélange à l'état fondu des réactifs en présence de catalyseur. De façon usuelle la condensation s'effectue sous agitation à une température comprise entre 100 et 350 ° C, et de préférence entre 180 et 300 ° C, dans un temps de 10 minutes à 15 heures selon la nature et la masse de chacun des réactifs. La réaction peut être conduite à pression sensiblement atmosphérique en milieu inerte ou sous vide de l'ordre de 6 à 670 Pa.

Pour que la réaction de polycondensation s'effectue dans les conditions les plus favorables, il est recommandé de faire réagir les réactifs en respectant sensiblement la stoechiométrie entre les groupements carboxyliques du polyamide et les groupements hydroxyles des $\alpha,\omega$ diols comportant une fonction amine tertiaire par molécule.

Les catalyseurs recommandés pour la préparation de ces polyesteramides et polyétheresteramides sont des tétraalcoxydes métalliques qui répondent à la formule générale $M(OQ)_4$ dans laquelle M représente le titane, le zirconum ou l'hafnium. Dans une même molécule les groupements Q, identiques ou différents, désignent des radicaux alcoyles linéaires ou ramifiés possédant de 1 à 24 atomes de carbone et mieux de 1 à 8. Comme exemples de catalyseur on peut citer $Zr(OC_2H_5)_4$, $Zr(O\text{-}isoC_3H_7)_4$, $Zr(OC_4H_9)_4$, $Zr(OC_5H_{11})_4$, $Zr(OC_6H_{13})_4$ $Hf(OC_2H_5)_4$, $Hf(OC_4H_9)_4$, $Hf(O\text{-}isoC_3H_7)_4$, $Ti(OC_4H_9)_4$. Il est employé, seul ou en mélange, en proportion pondérale convenable d'environ 0,01 à 5 % de l'ensemble du milieu réactionnel.

Les polyamides dicarboxyliques entrant dans la fabrication des produits de l'invention sont connus en eux-mêmes. Ils sont obtenus selon les méthodes classiques de préparation de tels polyamides comme par exemple par polycondensation d'un lactame et/ou d'un amino-acide ou d'un diacide et d'une diamine. Ces polycondensations sont réalisées en présence d'un diacide organique dont les fonctions acides sont fixées de préférence à chacune des extrémités de la molécule. Ces diacides se fixent pendant la polycondensation comme constituants de la chaine macromoléculaire des polyamides et agissent comme limitateur de chaine ce qui permet d'obtenir des polyamides $\alpha,\omega$ dicarboxyliques. Selon l'importance de l'excès de diacide organique dans la polycondensation, il est possible de régler la longueur de la chaine macromoléculaire, et par conséquent le poids moléculaire moyen, du polyamide.

Les diacides carboxyliques utilisés dans la réaction de synthèse du polyamide pour permettre la fixation d'un groupement carboxylique à chacune des extrémités de la chaine polyamide, en ayant le rôle de limitateur de chaine sont notamment : les diacides alcane-dioïques comme par exemple les acies succinique, adipique, subérique, azélaïque, sébacique, undécanoïque, dodécanoïque, ou encore des diacides cycloaliphatiques ou aromatiques tels que les acides téréphtalique, isphtalique ou cyclohexanedicarboxylique.

Les lactames et amino-acides utilisés dans la fabrication des polyamides dicarboxyliques possèdent une chaine hydrocarbonée dont le nombre d'atomes de carbone est de préférence compris entre 4 et 14. Ils sont habituellement choisis parmi : le butyrolactame, le caprolactame, l'eonantholactame, le décalactame, l'undécanolactame, le dodécanolactame, l'acide 6-amino hexanoïque, l'acide 10-amino décanoïque, l'acide 11-aminoundécanoïque, l'acide 12-aminododécanoïque.

Parmi les polyamides résultant de la polycondensation d'un diacide avec une diamine on peut citer les nylons 6-6, 6-9, 6-10 et 6-12 obtenus à partir d'hexaméthylène diamine et d'acide adipique, azélaïque, sébacique et 1-12 dodécanoïque ou encore le nylon 9-6 obtenu à partir de la nonaméthylène diamine et d'acide adipique.

Les polyamides dicarboxyliques entrant dans la fabrication des produits de l'invention possèdent des masses moléculaires moyennes pouvant varier dans un large intervalle. Ces masses moléculaires moyennes sont de préférence comprises entre 300 et 15 000 et mieux 600 et 5 000.

Les $\alpha,\omega$ diols entrant dans la fabrication des produits de l'invention sont connus en eux-mêmes. Ils sont obtenus par addition d'un oxyde d'alylène sur une amine primaire selon la réaction

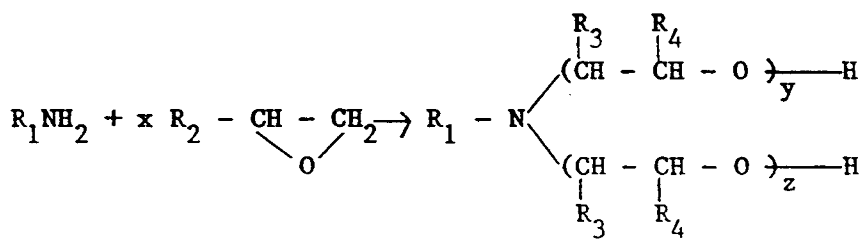

avec :

$R_1$ correspondant à un radical alcoyle linéaire ou ramifié, saturé ou insaturé contenant de 1 à 24 atomes de carbone ou un radical aromatique ou cycloaliphatique

$R_2$ corresopndant à l'hydrogène ou à un radical alcoyle contenant de 1 à 24 atomes de carbone, sachant que

$R_3 = R_2$ si $R_4 = H$

et/ou $R_3 = H$ si $R_4 = R_2$

et $x = y + z$

L'addition de l'oxyde d'alkylène sur l'amine primaire conduit à la formation d'un composé $\alpha,\omega$ dihydroxylé dont la longueur de la chaine c'est-à-dire le poids moléculaire moyen dépend essentiellement de la quantité d'oxyde d'alkylène additionnée.

Il n'est pas exclu de faire réagir plusieurs oxydes d'alkylène différents.

Lorsque y et z sont égaux à 1, ce qui correspond à l'addition de 2 moles d'oxyde d'alkylène par mole d'amine, le composé résultant est une amine tertiaire di $\beta$ hydroxylée. Lorsque x est supérieur à 2, ce qui signifie qu'au moins y ou z est supérieur à 1, le produit obtenu est alors un polyoxyalkylènenglycol comportant dans la chaine macromoléculaire une fonction amine tertiaire dont la position dépend uniquement des valeurs respectives de y et z.

Les amines primaires susceptibles de réagir avec l'oxyde d'alkylène peuvent être par exemple choisies parmi les amines alcanes linéaires ou ramifiées comme : la méthylamine, l'éthylamine, la n-propylamine, le n-butylamine, l'isobutylamine, la n-hexylamine, la n-heptylamine, la n-octylamine, la n-décylamine, la n-undécylamine, la n-dodécylamine, la n-tétradecylamine, la n-hexadecylamine, le n-octadécylamine, la n-eicosanoylamine, la n-docosanoylamine, la n-tétracosanoylamine, parmi les amines à chaine carbonée insaturée comme l'octadécyl-10-ényl-1-amine, l'octadécyl-10,13-diényl-1-amine, l'octadécyl-10,13-16-triényl-1-amine, parmi les mélanges d'amines à chaines carbonée saturée et insaturée linéaires ou ramifiées obtenues à partir d'acides gras de coprah, de suif ou d'oléine, ou encore parmi les amines aromatiques ou cycloaliphatiques comme l'aniline, la benzylamine, l'orthotoluidine, la cyclohexylamine.

Parmi les oxydes d'alylène capables de s'additionner à l'amine primaire on choisit de préférence l'oxyde d'éthylène et l'oxyde de propylène.

Les amines tertiaires di $\beta$ hydroxylées ou les polyoxyalkylèneglycols entrant dans la fabrication des produits de l'invention possèdent des masses moléculaires pouvant varier dans un large intervalle. Ces masses moléculaires sont de préférence comprises entre 119 et 6 000 et mieux entre 119 et 3 000.

Les exemples suivants illustrent l'invention de façon non limitative.

Dans ces exemples :

. la dureté SHORE D est donnée selon la norme ASTM D 1484,

. la contrainte est exprimée en MPa et l'allongement en pour cent au seuil d'écoulement et à la rupture en traction suivant la norme ASTM D 638,

. le point Vicat en °C est exprimé d'après la norme ASTM D 1525,

. la flèche est donnée en mm., la contrainte en MPa et le module en MPa lors des essais de flexion selon la norme ASTM D 790,

. la viscosité inhérente de chaque polycondensat a été mesurée dans le meta-crésol à 20°C (0,5 g. de produit pour 100 g. de solvant), elle est exprimée en $dlg^{-1}$,

. le point de fusion a été déterminé par analyse thermique différentielle.

## EXEMPLE 1

Dans un réacteur en acier inoxydable de 6 litres on introduit 1664 g. d'un polyamide 12 dicarboylique d'un poids moléculaire moyen de 2080 préparé au préalable par polycondensation du dodécanolactame en présence d'acide adipique. On ajoute ensuite 304 g. d'un mélange d'amines tertiaires oxyéthylées d'un poids moléculaire moyen de 380 obtenu préalablement par addition de 2,7 moles d'oxyde d'éthylène sur un mélange d'amines primaires dérivées d'acides gras de suif. On ajoute également 9,8 g. de tétrabutylorthozirconate.

Après avoir mis sous atmosphère inerte le milieu réactionnel on chauffe jusqu'à ce que la température ait atteint 240°C. On fait alors un vide de 27 Pa à l'intérieur du réacteur en maintenant une agitation vigoureuse à partir du moment où se produit la fusion des constituants. la réaction est ainsi poursuivie pendant 1 heure à 240°C.

Au fur et à mesure que la viscosité augmente la vitesse d'agitation doit être réduite.

Le polyesteramide est recueilli à la sortie du réacteur sous forme de joncs liquides qui se solidifient et refroidissent par immersion dans un bac d'eau. Le produit est ensuite granulé, séché et moulé sur une presse ARBURG sous forme d'éprouvettes normalisées permettant d'effectuer des essais de traction et flexion.

Ces essais ont conduit aux valeurs suivantes :

- 60 de dureté SHORE D
- l'allongement à la traction est de 24 % sous 22 MPa au seuil d'écoulement et de 195 % sous 35 MPa à la rupture,
- en flexion le module est de 344 MPa avec une contrainte de 10,5 MPa et une flèche de 24 mm.,
- le point Vicat sous 1 Kg. est de 147,5°C.

Ce polyesteramide possède une viscosité inhérente de 0,50 $dlg^{-1}$. Sa température de fusion est de 160°C.

Le polyétheresteramide répond à la formule:

$$\left[\left(\underset{\substack{\|\\O}}{C}-(CH_2)_{11}-NH\right)_p \underset{\substack{\|\\O}}{C}-(CH_2)_4-\underset{\substack{\|\\O}}{C}-\left(NH-(CH_2)_{11}-\underset{\substack{\|\\O}}{C}\right)_q-\left(O-CH_2-CH_2\right)_y \underset{\substack{|\\R_1}}{N} \left(CH_2-CH_2-O\right)_z\right]_n$$

avec p + q = 9,82 ; y + z = 2,7

et

$R_1$ = $-C_{14}H_{29}$ (2 %) , $-C_{16}H_{33}$ (25 %), $-C_{18}H_{37}$ (30 %), $-C_{20}H_{41}$ (3 %) et 40 % d'un mélange de $-C_{18}H_{35}$, $-C_{18}H_{33}$ et $-C_{18}H_{31}$

## EXEMPLE 2

Suivant un mode opératoire analogue à l'exemple 1, on fait réagir 1 500 g. de polyamide 11 dicarboxylique résultant de la polycondensation de l'acide amino-11-undécanoïque en présence d'acide adipique d'un poids moléculaire moyen de 2 010 avec 440,3 g. d'un mélange d'amines oxyéthylées d'un

poids moléculaire moyen de 590 issu de l'addition de 8,61 moles d'oxyde d'éthylène sur un mélange d'amines primaires dérivées d'acides gras de coprah, en présence de 5,9 g de tétrabutylorthozirconate pendant 90 minutes à 245 ° C sous une pression de 27 Pa.

Le polyétheresteramide préparé dans ces conditions présente les caractéristiques suivantes :

| | |
|---|---|
| - viscosité inhérente<br>- température de fusion<br>- point de Vicat sous 1 Kg<br>dureté SHORE D | 0,80 $dlg^{-1}$<br>169 ° C<br>155 ° C<br>54 |
| - propriétés en traction | |
| . allongement au seuil d'écoulement<br>. allongement à la rupture | 50% sous 19,9 MPa<br>404% sous 39,7 MPa |
| - propriétés en flexion | |
| . flèche<br>. contrainte<br>. module | 24 mm.<br>6,6 MPa<br>242 MPa |

Il répond à la formule

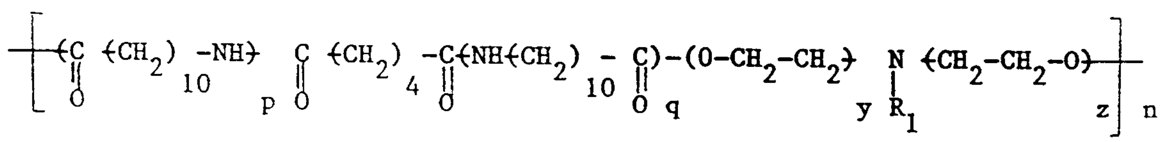

avec p + q = 10,19 ; y + z = 8,61
et

$R_1$ = $-C_{10}H_{21}$ (3 %), $-C_{12}H_{25}$ (60 %), $-C_{14}H_{29}$ (20 %), $-C_{16}H_{33}$ (10 %) et $-C_{18}H_{37}$ (7 %),

EXEMPLE 3

Suivant le mode opératoire de l'exemple 1, on fait réagir 1 620 g. d'un polyamide 6 dicarboxylique, obtenu par polycondensation du caprolactame en présence d'acide adipique, d'un poids moléculaire moyen de 1 540 avec 399,75 g. du mélange d'amines tertiaires oxyéthylées utilisé dans l'exemple 1, en présence de 21 g. de tétrabutylorthozirconate.

La durée de réaction à 250 ° C et sous vide poussé est de 8 heures.

Le point de fusion du polymère obtenu est de 200 ° C et il présente les caractéristiques suivantes :

| | |
|---|---|
| - dureté SHORE D<br>- viscosité inhérente<br>- point Vicat sous 1 Kg. | 62<br>0,70 $dlg^{-1}$<br>174 ° C |
| - propriétés en traction | |
| . allongement au seuil d'écoulement<br>. allongement à la rupture | 18 % sous 21, 4 MPa<br>340 % sous 30 MPa |
| - propriétés en flexion | |
| . flèche<br>. contrainte<br>. module | 25 mm.<br>9,4 MPa<br>327 MPa |

Le polyétheresteramide répond à la formule :

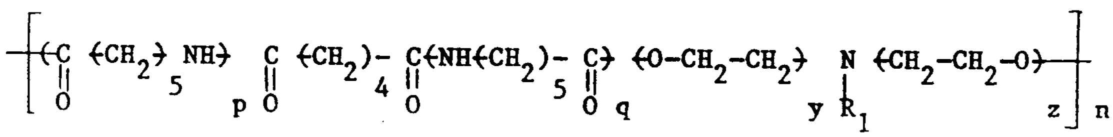

avec p + q = 12,34 et y + z = 2,7
et

$R_1$ = $-C_{14}H_{29}$ (2 %), $-C_{16}H_{33}$ (25 %), $-C_{18}H_{37}$ (30 %), $-C_{20}H_{41}$ (3 %) et 40 % d'un mélange de $-C_{18}H_{35}$, $-C_{18}H_{33}$ et $-C_{18}H_{31}$

EXEMPLE 4

Dans un réacteur en acier inoxydable de 6 litres, on introduit 1 1900 g. du polyamide 12 dicarboxylique utilisé dans l'exemple 1. On ajoute 108,7 g de N-méthyl diéthanolamine et 15,46 g. de tétrabutylorthozirconate.

Après avoir mis le milieu réactionnel sous atmosphère inerte, on chauffe jusqu'à ce que la température ait atteint 210 ° C. Après 1 heure à cette température, on fait le vide à l'intérieur du réacteur en procédant par paliers, tout en augmentant la température du milieu réactionnel jusqu'à 240 ° C. La réaction est ainsi poursuivie pendant 3 heures sous une pression de 40 Pa.

Le polyesteramide préparé dans ces conditions possède les caractéristiques suivantes :

| | |
|---|---|
| - dureté SHORE D<br>- viscosité inhérente<br>- point Vicat sous 1 Kg<br>- température de fusion | 66<br>0,50 $dlg^{-1}$<br>154 ° C<br>163 ° C |
| - propriétés en traction | |
| . allongement au seuil d'écoulement<br>. allongement à la rupture | 12,5 % sous 26 MPa<br>371 % sous 36,5 MPa |
| - propriétés en flexion | |
| . flèche<br>. contrainte<br>. module | 27 mm.<br>15 MPa<br>490 MPa |

Le polyétheresteramide répond à la formule suivante :

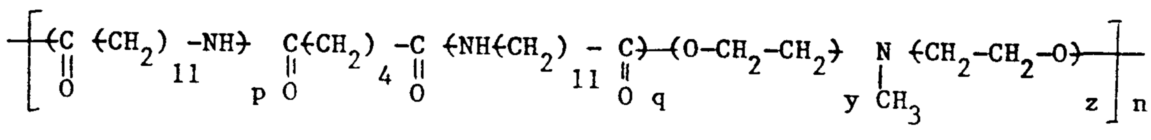

avec p + q = 9,82 et y = Z = 1

EXEMPLES 5 à 11

Suivant le mode opératoire de l'exemple 1, on fait réagir un polyamide 6, 11 ou 12 dicarboxylique obtenu préalablement par polycondensation respectivement du caprolactame, de l'acide amino-11-undécanoïque, ou du dodecanolactame en présence d'acide adipique avec un mélange d'amines oxyéthylées obtenues par addition de n moles d'oxyde d'éthylène sur un mélange d'amines primaires dérivées d'acides gras de suif, d'oléine ou de coprah, en présence de tétrabutylorthozirconate.

Pour chaque exemple, la nature du polyamide et du mélange d'amines oxyéthylées, leur poids moléculaire moyen respectif, la quantité de chacun de ces produits, y compris de catalyseur, introduite

dans le réacteur, la durée et la température de réaction, sont précisés dans le tableau 1.

Pour chaque réaction le vide a été fait à l'intérieur du réacteur dès l'obtention de la température souhaitée.

La durée de réaction correspond à l'intervalle de temps compris entre la mise sous vide et la récupération du polymère sous forme de joncs liquides qui solidifient et refroidissent par immersion dans un bac d'eau.

Les caractéristiques de chaque produit analysé sont regroupées dans le tableau 2.

Les produits obtenus répondent aux formules suivantes:

Formule du polyétheresteramide obtenu dans l'exemple N° 5

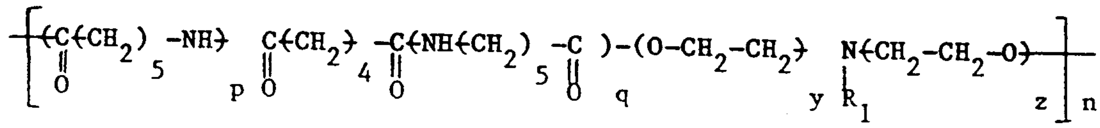

avec p + q = 19,41 et y + z = 5
et

$R_1$ = $-C_{14}H_{29}$ (2 %), $-C_{16}H_{33}$ (25 %), $-C_{18}H_{37}$ (30 %), $-C_{20}H_{41}$ (3 %) et 40 % d'un mélange de $-C_{18}H_{35}$, $-C_{18}H_{33}$ et $-C_{18}H_{31}$

Formule du polyétheresteramide obtenu dans l'exemple N° 6

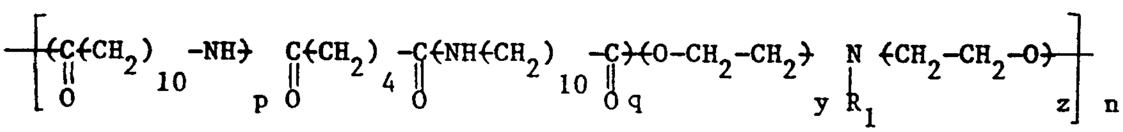

avec p + q = 10,13 et y + z = 5
et

$R_1$ = $-C_{10}H_{21}$ (3 %), $-C_{12}H_{25}$ (60 %), $-C_{14}H_{29}$ (20 %), $-C_{16}H_{33}$ (10 %), et $-C_{18}H_{37}$ (7 %)

Formule du polyétheresteramide obtenu dans l'exemple N° 7

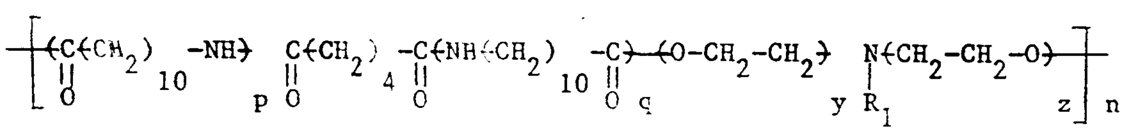

avec p + q = 10,13 et y + z = 4,27
et

$R_1$ = $-C_{16}H_{33}$ (15 %), $-C_{18}H_{37}$ (5 %) et 80 % d'un mélange de $-C_{18}H_{35}$, $-C_{18}H_{33}$ et $-C_{18}H_{31}$

Formule du polyétheresteramide obtenu dans l'exemple N° 8

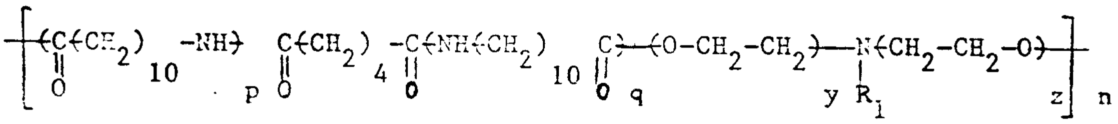

avec p + q = 10,13 et y + z = 11
et

$R_1$ = $-C_{14}H_{29}$ (2 %), $-C_{16}H_{33}$ (25 %), $-C_{18}H_{37}$ (30 %), $-C_{20}H_{41}$ (3 %), et 40 % d'un mélange de $-C_{18}H_{35}$, $-C_{18}H_{33}$ et $-C_{18}H_{31}$

Formule du polyétheresteramide obtenu dans l'exemple N° 9

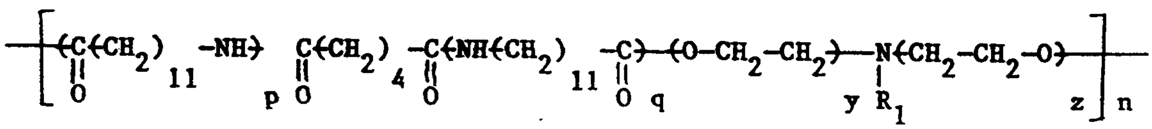

avec p + q = 3,83 et y = z = 1
et

$R_1$ = $-C_{10}H_{21}$ (3 %), $-C_{12}H_{25}$ (60 %), $-C_{14}H_{29}$ (20 %) $-C_{16}H_{33}$ (10 %) et $-C_{18}H_{37}$ (7 %)

Formule du polyétheresteramide obtenu dans l'exemple N° 10

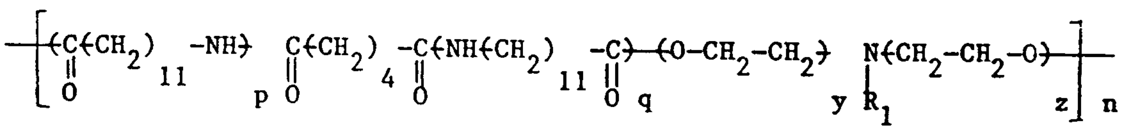

avec p + q = 9,675 et y + z = 7,25
et

$R_1$ = $-C_{14}H_{29}$ (2 %), $-C_{16}H_{33}$ (25 %), $-C_{18}H_{37}$ (30 %) $-C_{20}H_{41}$ (3 %) et 40 % d'une mélange de $-C_{18}H_{35}$, $-C_{18}H_{33}$ et $-C_{18}H_{31}$

Formule de polyétheresteramide obtenu dans l'exemple N° 11

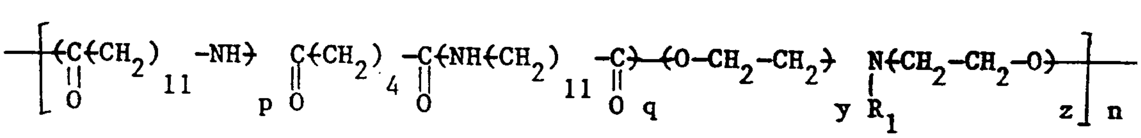

avec p + q = 9,675 et y + z = 9,52
et

$R_1$ = $-C_{14}H_{29}$ (2 %), $-C_{16}H_{33}$ (25 %), $-C_{18}H_{37}$ (30 %) $-C_{20}H_{41}$ (3 %), et 40 % d'un mélange de $-C_{18}H_{35}$, $-C_{18}H_{33}$ et $-C_{18}H_{31}$

TABLEAU 1

| Exemple n° | Polyamide dicarboxylique | | Mélange d'amines oxyéthylées | | | Quantité introduite dans le réacteur g | | | Température de réaction (°C) | Durée de réaction (min.) |
|---|---|---|---|---|---|---|---|---|---|---|
| | Nature | Poids moléculaire moyen g | Nature des acides gras | n | Poids moléculaire moyen g | Polyamide diacide | Amines oxyéthylées | $Zr(OBu)_4$ | | |
| 5 | 6 | 2 340 | SUIF | 5 | 480 | 1 638 | 336 | 20 | 245 | 260 |
| 6 | 11 | 2 000 | COPRAH | 5 | 420 | 1 640 | 344,4 | 10,3 | 250 | 160 |
| 7 | 11 | 2 000 | OLEIQUE | 4,27 | 450 | 1 600 | 360 | 17,6 | 245 | 400 |
| 8 | 11 | 2 000 | SUIF | 11 | 745 | 1 500 | 558,75 | 10,3 | 240 | 235 |
| 9 | 12 | 900 | COPRAH | 2 | 290 | 1 548 | 498,8 | 23,3 | 240 | 365 |
| 10 | 12 | 2 050 | SUIF | 7,25 | 580 | 1 681 | 475,6 | 12,3 | 235 | 255 |
| 11 | 12 | 2 050 | SUIF | 9,52 | 680 | 1 476 | 489,6 | 6,5 | 235 | 55 |

TABLEAU 2

| Exemple n° | Température de fusion °C | Viscosité inhérente $dlg^{-1}$ | Dureté SHORE D | Point Vicat sous 1 Kg °C | Propriétés en traction: Au seuil d'écoulement | | Propriétés en traction: A la rupture | | Propriétés en flexion | | |
|---|---|---|---|---|---|---|---|---|---|---|---|
| | | | | | Allongement % | Contrainte MPa | Allongement % | Contrainte MPa | Flèche mm. | Contrainte MPa | Module MPa |
| 5 | 202 | 0,77 | 63 | 180 | 40 | 22,2 | 235 | 35,6 | 23,4 | 11,7 | 416 |
| 6 | 170 | 0,51 | 59 | 152 | 70 | 21,2 | 364 | 32,6 | 25,5 | 8,9 | 324 |
| 7 | 170 | 0,50 | 58 | 155 | 40 | 21,8 | 235 | 22,4 | 28,9 | 8,6 | 264 |
| 8 | 170 | 0,68 | 55 | 155 | 26 | 16,0 | 404 | 36,0 | 24,0 | 6,0 | 209 |
| 9 | 145 | 0,48 | 51 | 110 | 18 | 12,0 | 360 | 23,0 | 27,0 | 6,0 | 194 |
| 10 | 158 | 0,51 | 58 | 147 | 18 | 18,0 | 305 | 28,0 | 26,0 | 10,0 | 293 |
| 11 | 158 | 0,85 | 55 | 144 | 40 | 17,8 | 453 | 34,8 | 27,5 | 7,9 | 256 |

Tenue à l'eau pendant 7 hours à 25 ° C des polyesteramides et polyétheresteramides obtenus

Afin d'évaluer cette propriété, 5 éprouvettes normalisées des différents polyesteramides et polyétheresteramides préparés selon les modes opératoires décrits dans les exemples 1 à 11 ont été immergées

pendant 7 jours à 25 ° C dans l'eau.

A titre de comparaison, le même essai a été effectué avec des polyétheresteramides (PEEA 1 à 6) préparés selon le mode opératoire décrit dans le brevet français n° 2 273 021. Les produits obtenus ont été granulés, séchés et moulés sur une presse ARBURG sous forme d'éprouvettes normalisées. Les mesures de contrôle et d'identification des produits obtenus sont :

- la viscosité inhérente, mesurée dans le meta-crésol à 20 ° C (0,5 g. de produit pour 100 g. de solvant). Elle est exprimée en dl g-1.
- la température de fusion du polycondensat, déterminée d'après l'analyse thermique différentielle.
- la dureté SHORE D selon la norme ASTM D 1484.
- PEEA 1 résulte de la polycondensation de 1400 g. d'un polyamide 12 dicarboxylique, d'un poids moléculaire moyen de 2000 obtenu à partir de dodécalactame et d'acide adipique, avec 280 g. d'un polyoxyéthylène glycol d'un poids moléculaire moyen de 400. Le polyétheresteramide obtenu présente une viscosité inhérente de 1,33 dl g-1, une température de fusion de 158 ° C et une dureté SHORE D de 59.
  Il répond à la formule suivante :

  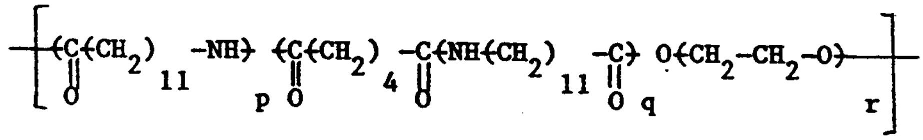

  avec p + q = 9,41 et r = 8,68
- PEAA 2 résulte de la polycondensation de 1400 g. du polyamide 12 dicarboxylique, utilisé dans la préparation de PEEA 1, avec 420 g. d'un polyoxyéthylène glycol d'un poids moléculaire moyen de 600. Le polyéther - ester - amide obtenu présente une viscosité inhérente de 1,14 dl g-1, une température de fusion de 168 ° C et une dureté SHORE D de 58.
  Il répond à la formule suivante :

  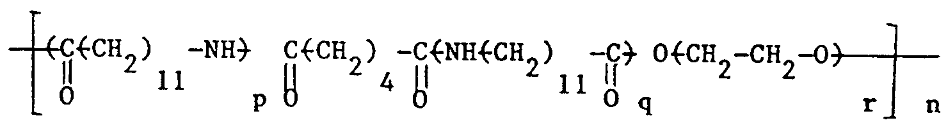

  avec p + q = 9,41 et r = 13,23
- PEEA 3 résulte de la polycondensation de 1000 g. d'un polyamide 12 dicarboxylique, d'un poids moléculaire moyen de 850 obtenu à partir de dodécanolactame et d'acide adipique, avec 470,6 g. du polyoxyéthylène glycol utilisé dans la préparation de PEEA 1. Le polyétheresteramide résultant présente une viscosité inhérente de 0,81 dl g-1, une température de fusion de 138 ° C et une dureté SHORE D de 44.
  Il répond à la formule suivante :

  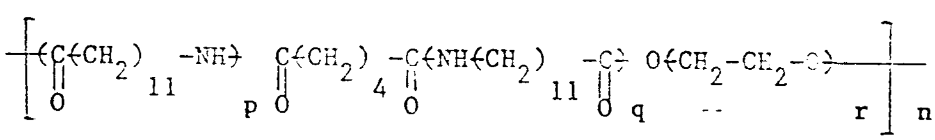

  avec p + q = 3,57 et r = 8,68
- PEEA 4 résulte de la polycondensation de 918 g. du polyamide 12 dicarboxylique utilisé dans la préparation de PEEA 3, avec 648 g. du polyoxyéthylène glycol utilisé dans la préparation de PEEA 2. Le polyétheresteramide obtenu présente une viscosité inhérente de 0,96 dl g-1, une température de fusion de 145 ° C et une dureté SHORE D de 42.
  Il répond à la formule suivante :

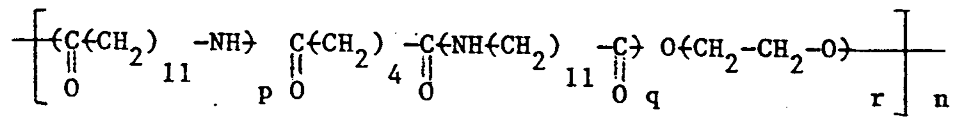

avec p + q = 3,57 et r = 13,23

- PEEA 5 résulte de la polycondensation de 1300 g. d'un polyamide 11 dicarboxylique, d'un poids molculaire moyen de 2000, préparé à partir d'acide amnio-11-undécanoïque et d'acide adipique, et de 260 g. du polyoxyéthylène glycol utilisé dans la préparation de PEEA 3. Le polyétheresteramide obtenu présente une viscosité inhérente de 0,87 dl g-1, une température de fusion de 175° C et une dureté SHORE D de 56.

Il répond à la formule suivante :

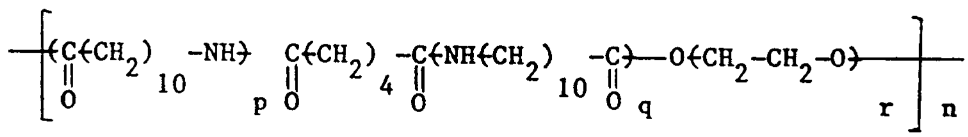

avec p + q = 10,13 et r = 8,68

- PEEA 6 résulte de la polycondensation de 1309 g. d'un polyamide 6 dicarboxylique, d'un poids moléculaire moyen de 1540, préparé à partir de caprolactame et d'acide adipique, avec 340 g. du polyoxyéthylène glycol utilisé dans la préparation de PEEA 5. Le polyétheresteramide obtenu présente une viscosité inhérente de 1,03 dl g-1, une température de fusion de 202° C et une dureté SHORE D de 56.

Il répond à la formule suivante :

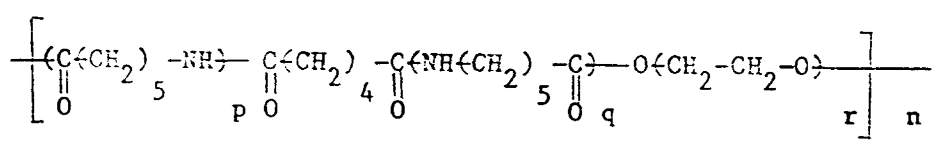

avec p + q = 12,34 et r = 8,68

La reprise en poids après 7 jours à 25° C, dans l'eau, des polyesteramides et polyétheresteramides des exemples 1 à 11 et des polyétheresteramides PEEA 1 à 6 est donnée dans le tableau suivant :

TABLEAU 3

| Polyesteramides et Polyétheresteramides 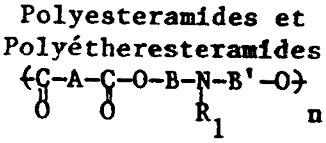 | | Polyétheresteramides 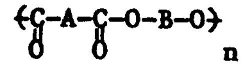 | |
|---|---|---|---|
| Exemple n° | Reprise en poids % | n° du PEEA | Reprise en poids % |
| 1 | 0,57 | | |
| 2 | 3,00 | 1 | 3,97 |
| 3 | 3,59 | | |
| 4 | 0,76 | 2 | 10,01 |
| 5 | 17,60 | | |
| 6 | 0,82 | 3 | 10,76 |
| 7 | 0,85 | | |
| 8 | 2,92 | 4 | 27,45 |
| 9 | 0,74 | | |
| 10 | 1,24 | 5 | 4,71 |
| 11 | 4,00 | 6 | 21,31 |

## Revendications

**1.** Polyesteramides et polyétheresteramides de formule

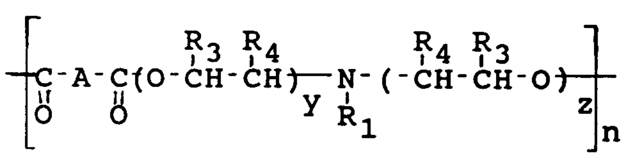

dans laquelle la séquence polyamide dicarboxylique

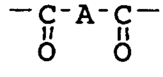

correspond à la formule

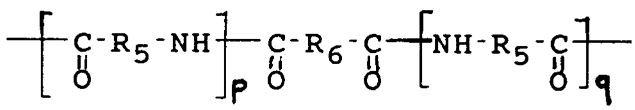

dans laquelle $R_5$ peut être :

- soit une chaîne hydrocarbonée constituant un lactame et/ou un aminoacide,

soit la structure

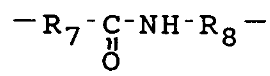

dans laquelle

$R_7$ et $R_8$ sont respectivement les restes hydrocarbonés d'un diacide et d'une diamine,

$R_6$ représente le reste d'un diacide organique,

p et q identiques ou différents, l'un d'eux pouvant être nul, représentent une répétition d'un nombre d'unités récurrentes constituant la chaîne macromoléculaire de la séquence polyamide dicarboxylique,

$R_3$ et $R_4$ représentent l'hydrogène ou seulement l'un des deux représente l'hydrogène, l'autre étant un radical alcoyle contenant de 1 à 24 atome(s) de carbone,

$R_1$ est un radical alcoyle linéaire ou ramifié, saturé ou insaturé, contenant de 1 à 24 atom(s) de carbone, ou un radical aromatique ou cycloaliphatique

y + z est compris entre 2 et 100 sachant que y et z sont au moins égaux à 1

n représente une répétition d'un nombre d'unités récurrentes constituant la chaîne macromoléculaire.

2. Polyesteramides et polyétheresteramides selon la revendication 1, caractérisés en ce que $R_3$ ou $R_4$ représente $CH_3$.

3. Polyesteramides et polyétheresteramides selon l'une des revendications 1 ou 2, caractérisés en ce que n est un nombre compris entre 1 et 75.

4. Polyesteramides et polyétheresteramides selon l'une des revendications 1 à 3, caractérisés en ce que la chaîne hydrocarbonée de $R_5$ contient de 4 à 14 atomes de carbone.

5. Polyesteramides et polyétheresteramides selon l'une des revendications 1 à 4, caractérisés en ce que $R_6$ est un groupement aliphatique, cycloaliphatique ou aromatique.

6. Polyesteramides et polyétheresteramides selon l'une des revendications 1 à 5, caractérisés en ce que la masse moléculaire moyenne de la séquence polyamide dicarboxylique est comprise entre 300 et 15 000, p + q étant compris entre 1 et 100.

7. Polyesteramides et polyétheresteramides selon l'une des revendications 1 à 6, caractérisés en ce que la proportion pondérale du groupement

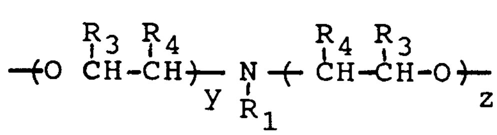

représente 2 à 90 % du groupement total

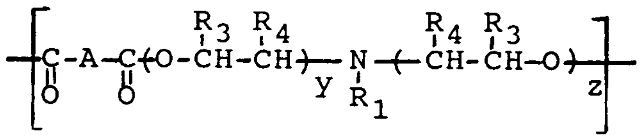

**8.** Procédé de fabrication des polyesteramides et polyétheresteramides des revendications 1 à 7, consistant à faire réagir une polyamide dicarboxylique dont les fonctions acides sont situées aux extrémités de la chaîne avec un $\alpha$, $\omega$ diol, caractérisé en ce que l' $\alpha$, $\omega$ diol est une amine tertiaire di $\beta$ hydroxylée ou un polyoxyalkylène glycol contenant une fonction amine tertiaire dans la chaîne de formule

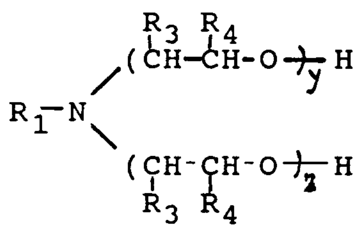

dans laquelle $R_1$, $R_3$, $R_4$, y et z sont tels que définis dans les revendications 1 ou 2.

**9.** Procédé selon la revendication 8, caractérisé en ce que l'on fait réagir en poids 98 à 10 % de polyamide dicarboxylique avec 2 à 90 % d' $\alpha$, $\omega$ diol.

**10.** Procédé selon l'une des revendications 8 ou 9, caractérisé en ce que l'on fait réagir les réactifs en respectant sensiblement la stoechiométrie entre les groupements carboxyliques du polyamide et les groupements hydroxyles des $\alpha$, $\omega$ diol comportant une fonction amine tertiaire par molécule.

**11.** Procédé selon l'une des revendications 8 à 10, caractérisé en ce que la polycondensation s'effectue par mélange à l'état fondu des réactifs en présence de catalyseur.

**12.** Procédé selon l'une des revendications 8 à 11, caractérisé en ce que le catalyseur est de formule M-$(OQ)_4$ dans laquelle M représente le titane, le zirconium ou le hafnium et Q est un radical alcoyle linéaire ou ramifié possédant de 1 à 24 atomes de carbone.

## Claims

**1.** Polyesteramides and polyetheresteramides of formula

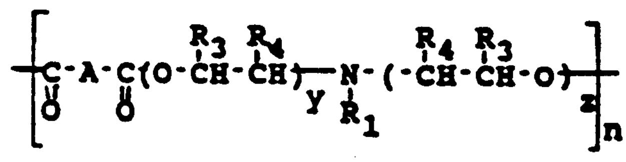

in which the dicarboxylic polyamide block

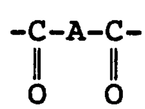

corresponds to the formula

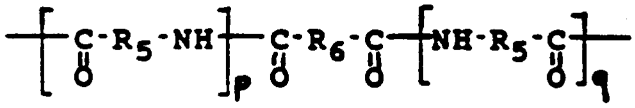

in which $R_5$ may be:

- either a hydrocarbon chain constituting a lactam and/or an aminoacid,

or the structure

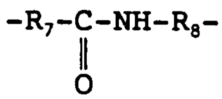

in which

$R_7$ and $R_8$ are the hydrocarbon residues of a diacid and of a diamine respectively,

$R_6$ denotes the residue of an organic diacid,

p and q, which are identical or different, it being possible for either of them to be zero, denote a repetition of a number of recurring units constituting the macromolecular chain of the dicarboxylic polyamide block,

$R_3$ and $R_4$ denote hydrogen or only one of the two denotes hydrogen, the other being an alkyl radical containing from 1 to 24 carbon atoms,

$R_1$ is a saturated or unsaturated, linear or branched alkyl radical containing from 1 to 24 carbon atoms, or an aromatic or cycloaliphatic radical

$y + z$ is between 2 and 100, it being known that y and z are at least equal to 1

n denotes a repetition of a number of recurring units constituting the macromolecular chain.

**2.** Polyesteramides and polyetheresteramides according to Claim 1, characterised in that $R_3$ or $R_4$ denotes $CH_3$.

**3.** Polyesteramides and polyetheresteramides according to either of Claims 1 and 2, characterised in that n is a number between 1 and 75.

**4.** Polyesteramides and polyetheresteramides according to one of Claims 1 to 3, characterised in that the hydrocarbon chain of $R_5$ contains from 4 to 14 carbon atoms.

**5.** Polyesteramides and polyetheresteramides according to one of Claims 1 to 4, characterised in that $R_6$ is an aliphatic, cycloaliphatic or aromatic group.

**6.** Polyesteramides and polyetheresteramides according to one of Claims 1 to 5, characterised in that the average molecular mass of the dicarboxylic polyamide block is between 300 and 15,000, $p + q$ being between 1 and 100.

**7.** Polyesteramides and polyetheresteramides according to one of Claims 1 to 6, characterised in that the weight proportion of the group

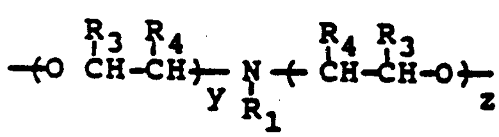

represents 2 to 90 % of the total group

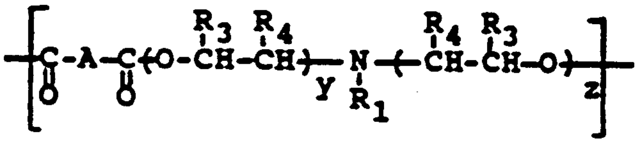

**8.** Process for the manufacture of polyesteramides and polyetheresteramides of Claims 1 to 7, consisting in reacting a dicarboxylic polyamide whose acidic functional groups are situated at the ends of the chain with an $\alpha,\omega$-diol, characterised in that the $\alpha,\omega$-diol, is a di-$\beta$-hydroxylated tertiary amine or a polyoxyalkylene glycol containing a tertiary amine functional group in the chain of formula

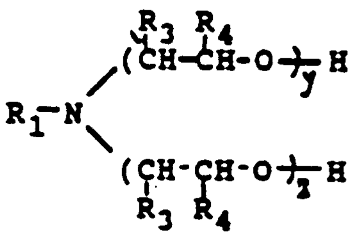

in which $R_1$, $R_3$, $R_4$, y and z are as defined in Claim 1 or 2.

**9.** Process according to Claim 8, characterised in that 98 to 10 % by weight of dicarboxylic polyamide is reacted with 2 to 90 % of $\alpha,\omega$-diol.

**10.** Process according to either of Claims 8 and 9, characterised in that the reactants are reacted by substantially conforming to the stoichiometry between the carboxylic groups of the polyamide and the hydroxyl groups of the $\alpha,\omega$-diol containing one tertiary amine functional group per molecule.

**11.** Process according to one of Claims 8 to 10, characterised in that the polycondensation takes place by mixing the reactants in the molten state in the presence of catalyst.

**12.** Process according to one of Claims 8 to 11, characterised in that the catalyst is of formula $M(OQ)_4$, in which M denotes titanium, zirconium or hafnium, and Q is a linear or branched alkyl radical containing from 1 to 24 carbon atoms.

**Patentansprüche**

**1.** Polyesteramide und Polyetheresteramide der Formel

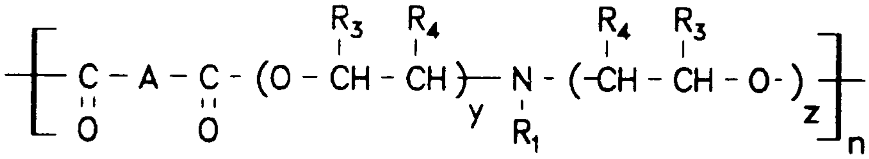

in welcher die Dicarboxylpolyamid-Sequenz

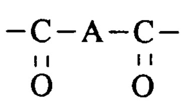

der Formel

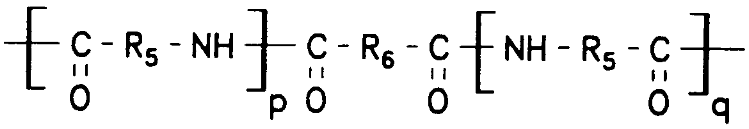

entspricht; in dieser Formel kann $R_5$

- entweder eine Kohlenwasserstoffkette sein, so daß ein Lactam und/oder eine Aminosäure gebildet wird,
- oder die Strukturkomponente

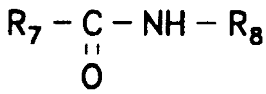

$R_7$ und $R_8$ sind die Kohlenwasserstoffreste einer Disäure beziehungsweise eines Diamins,
$R_6$ stellt einen organischen Disäurerest dar,
p und q können gleich oder verschieden sein, jedoch nicht gleichzeitig gleich Null, und geben die Anzahl der Wiederholungen der Einheiten wieder, die die makromolekulare Kette der Dicarboxylpolyamid-Sequenz bilden,
$R_3$ und $R_4$ können beide Wasserstoffstome darstellen, oder, falls nur einer der beiden Reste ein Wasserstoffatom darstellt, so ist der zweite ein Alkylrest, der 1 bis 24 Kohlenstoffatome enthält,
$R_1$ ist ein linearer oder verzweigter, gesättigter oder ungesättigter Alkylrest, der 1 bis 24 Kohlenstoffatome enthält, oder ein aromtischer oder cycloaliphatischer Rest,
die Summe y + z beträgt zwischen 2 und 100, wobei y und z größer oder gleich 1 sind,
n gibt die Anzahl der Wiederholungen der Einheiten wieder, die die makromolekulare Kette bilden.

2. Polyesteramide und Polyetheresteramide nach Anspruch 1, dadurch gekennzeichnet, daß $R_3$ oder $R_4$ einen Methylrest $-CH_3$ darstellt.

3. Polyesteramide und Polyetheresteramide nach einem der Anprüche 1 und 2, dadurch gekennzeichnet, daß n eine Zahl zwischen 1 und 75 ist.

4. Polyesteramide und Polyetheresteramide nach einem der Anprüche 1 bis 3, dadurch gekennzeichnet, daß die Kohlenwasserstoffkette des Restes $R_5$ 4 bis 14 Kohlenstoffatome enthält.

5. Polyesteramide und Polyetheresteramide nach einem der Anprüche 1 bis 4, dadurch gekennzeichnet, daß $R_6$ eine aliphatische, cycloaliphatische oder aromatische Gruppe ist.

6. Polyesteramide und Polyetheresteramide nach einem der Anprüche 1 bis 5, dadurch gekennzeichnet, daß das mittlere Molekulargewicht der Dicarboxylpolyamid-Sequenz zwischen 300 und 15000 liegt, wobei die Summe p + q zwischen 1 und 100 beträgt.

7. Polyesteramide und Polyetheresteramide nach einem der Anprüche 1 bis 6, dadurch gekennzeichnet, daß der Massenanteil der Gruppe

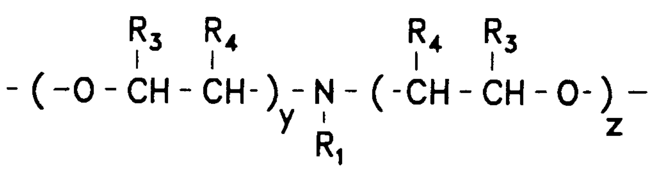

2 bis 90 % der Masse der gesamten Gruppe

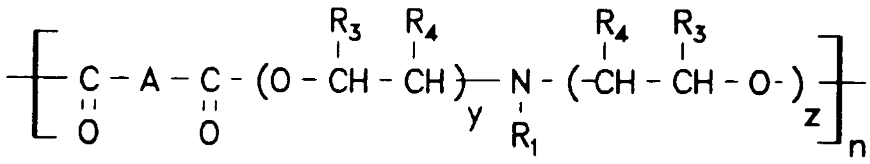

beträgt.

**8.** Verfahren zur Herstellung der Polyesteramide und Polyetheresteramide der Anprüche 1 bis 7, bestehend aus der Umsetzung eines Dicarboxylpolyamids, dessen Säuregruppen sich an den Enden der Kette befinden, mit einem $\alpha,\omega$-Diol, dadurch gekennzeichnet, daß das $\alpha,\omega$-Diol ein di-$\beta$-hydroxyliertes tertiäres Amin ist oder ein Polyoxalkylenglykol, das eine tertiäre Aminogruppe in der Kette enthält entsprechend der Formel

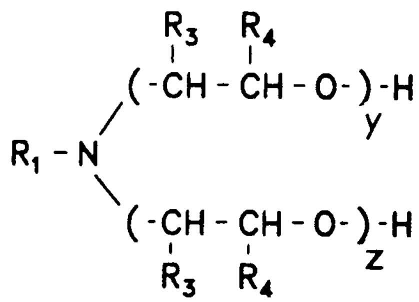

in welcher $R_1$, $R_3$, $R_4$, y und z wie in den Ansprüchen 1 und 2 definiert zu verstehen sind.

**9.** Verfahren nach Anspruch 8, dadurch gekennzeichnet, daß 98 bis 10 Gewichtsprozent an Dicarboxylpolyamid mit 2 bis 90 % $\alpha,\omega$-Diol umgesetzt werden.

**10.** Verfahren nach einem der Ansprüche 8 und 9, dadurch gekennzeichnet, daß die Reaktanten unter genauer Beachtung der Stöchiometrie zwischen den Carboxylgruppen des Polyamids und den Hydroxylgruppen des $\alpha,\omega$-Diols, das pro Molekül eine tertiäre Aminogruppe trägt, umgesetzt werden.

**11.** Verfahren nach einem der Ansprüche 8 bis 10, dadurch gekennzeichnet, daß die Polykondensation durch Mischen der Reaktanten im geschmolzenen Zustand in Gegenwart eines Katalysators durchgeführt wird.

**12.** Verfahren nach einem der Ansprüche 8 bis 11, dadurch gekennzeichnet, daß der Katalysator der Formel $M(OQ)_4$ entspricht, in welcher M ein Titan-, Zirkonium- oder Hafniumatom und Q einen linearen oder verzweigten Alkylrest mit 1 bis 24 Kohlenstoffatomen darstellen.